# FASCICULE DE BREVET EUROPEEN

(11) **EP 1 967 100 B1**
(45) Date de publication et mention de la délivrance du brevet: **20.05.2009**
(21) Numéro de dépôt: 07103613.1
(22) Date de dépôt: 06.03.2007
(51) Int. Cl.: A47J 31/06, A47J 31/40

(54) **Système et méthode pour la préparation d' un liquide alimentaire à partir d' une capsule**
System zur Herstellung eines Getränkes aus einer Kapsel und Verfahren
System for preparing a beverage from a capsule and method

(43) Date de publication de la demande: 10.09.2008
(73) Titulaire: Nestec S.A., 1800 Vevey (CH)
(72) Inventeur: Denisart, Jean-Luc, 1096 Cully (CH); Meier, Alain, 6837 Caneggio (CH); Bonacci, Enzo, 1073 Cully (CH); Pleisch, Hans Peter, 1802 Corseaux (CH); Talon, Christian, 1134 Vufflens-le-Château (CH)
(74) Mandataire: Borne, Patrice Daniel

(56) Documents cités:
- WO-A-20/06082064

## Description

La présente invention concerne un système pour la préparation d'un liquide alimentaire à partir d'une capsule. En particulier, l'invention concerne la préparation de boissons chaudes ou froides à partir de capsules contenant un ou plusieurs ingrédients alimentaires.

Il existe de nombreux systèmes pour préparer des boissons à partir de capsules. La façon d'insérer la capsule dans la machine doit être de préférence assez directe, sans complication et permettre facilement le retrait de la capsule après usage.

Dans la demande de brevet WO 2006/082064, il est décrit un dispositif avec un porte-capsule amovible comprenant un injecteur. L'injecteur peut-être positionné de manière excentrée sur la surface de la capsule; ce qui permet d'optimiser la circulation du fluide à l'intérieur de la capsule et permet donc de favoriser par exemple la dissolution ou la dispersion de certains ingrédients. Toutefois, un problème rencontré par ce dispositif est lié à un effet "geyser" ou "baleine" au moment du désengagement de l'injecteur du porte-capsule par rapport à l'unité d'alimentation. Cet effet se traduit par un jet de liquide sous pression qui s'échappe en dehors de la capsule et au travers de l'injecteur notamment lorsque la capsule possède un espace de tête de volume important. Ce jet provient essentiellement de la détente brutale des gaz contenus dans la capsule et comprimés dans celle-ci pendant la mise en pression par l'eau injectée dans la capsule. Lorsque le volume initial de gaz dans la capsule est important, la détente brutale du gaz dans la capsule produit un jet de liquide brulant (Effet "geyser") au travers de la perforation de la capsule. De plus, au moment du désengagement avec l'unité d'injection, l'effet de "geyser" est aussi favorisé par le très faible diamètre de l'injecteur.

Un autre problème vient du mode d'insertion du porte-capsule et de fermeture qui n'est pas intuitif et implique plusieurs mouvements combinés, notamment, un mouvement d'insertion en translation suivi d'un mouvement d'appui vers le bas sur le porte-capsule pour rapprocher l'unité d'alimentation et le porte-capsule relativement l'un par rapport à l'autre. Un avantage serait de rendre le mode de fermeture à la fois intuitif et simple d'utilisation tout en apportant une sécurité de fermeture tenant compte des pressions élevées mises en oeuvre dans la capsule.

Le but de la présente invention est d'apporter une solution à ces problèmes.

Pour cela, l'invention est basée selon un premier principe général qui consiste à limiter ou éliminer les résurgences liquides ou de mélange gaz-liquide au travers d'au moins un point d'injection de la capsule en raison de la surpression créée lors de l'injection d'un fluide sous pression en prévoyant de maintenir la surface d'injection de capsule de manière inclinée par rapport au plan horizontal tout en surélevant suffisamment le point d'injection de la capsule et en maintenant cette position jusqu'au moment du désengagement des moyens d'injection par rapport à la capsule.

Plus particulièrement, l'invention concerne un système pour la préparation d'un liquide alimentaire à partir d'une capsule comprenant un dispositif, celui-ci comprenant:- une unité d'alimentation en fluide d'injection dans la capsule un porte-capsule configuré pour recevoir et supporter une capsule, des moyens d'injection mobiles relativement au porte-capsule pour injecter un fluide d'injection dans la capsule, et une capsule comprenant une surface d'injection; ladite capsule étant prévue pour être logée dans le porte-capsule.

Le porte-capsule est positionné dans l'unité d'alimentation en position d'injection de manière que la surface d'injection de la capsule soit sensiblement maintenue selon un plan incliné inférieur à 45 degrés relativement au plan horizontal et les moyens d'injection sont configurés au moment du retrait pour former un point d'injection au travers de la surface d'injection de la capsule lequel est décalé du côté le plus élevé de ladite surface d'injection de la capsule après engagement des moyens d'injection avec la surface d'injection de la capsule.

Ainsi, l'invention vise à réduire le risque de résurgence sous pression de liquide ou de gaz et liquide, de préférence en maintenant un volume de gaz dans la capsule à l'endroit du point d'injection et donc, de préférence, au dessus du niveau possible de liquide restant dans la capsule, jusqu'au moment du désengagement des moyens d'injection dans la capsule. Ainsi, lors du désengagement, une détente se produit au travers du point d'injection sous forme essentiellement de gaz en diminuant le risque de projection de liquide en dehors de la capsule jusqu'à ce qu'à une réduction suffisante et sans danger de la pression du gaz s'établisse dans la capsule. Il est à noter que le niveau de liquide dans la capsule pourrait facilement atteindre le point d'injection si la surface d'injection de la capsule était horizontale. Au contraire, si la capsule était trop fortement inclinée, il ne serait plus possible de délivrer le liquide directement dans la tasse.

La surface d'injection de la capsule est sensiblement plane ou peut être légèrement convexe ou concave.

De préférence, le dispositif comprend un support d'injection relié par des moyens d'actionnement pour engager et désengager les moyens d'injection de la surface d'injection de la capsule en maintenant la capsule en position inclinée. Ainsi, la capsule n'est pas rétablie immédiatement en position horizontale au moment du désengagement des moyens d'injection mais sa surface d'injection reste en position inclinée. De ce fait, le temps de la détente étant assez bref (environ 1 à 3 secondes), le risque de projection de liquide sous pression est fortement minimisé.

Le désengagement des moyens d'injection permet aussi le dégazage de la capsule directement au travers du point d'injection.

Les moyens d'injection sont préférentiellement configurés pour former un point d'injection au travers de la surface à l'intérieur du quadrant le plus élevé possible par rapport au centre de ladite surface de la capsule. Par "quadrant", il faut entendre toute région de la surface d'injection limitée par deux droites perpendiculaires dont l'origine commune est le centre de la capsule.

Selon un aspect de l'invention, la surface d'injection de la capsule est inclinée selon un angle compris entre 2 et 25 degrés, de préférence 5 et 20 degrés, par rapport au plan horizontal.

Selon un aspect possible de l'invention, le porte-capsule est détachable du dispositif et le dispositif comprend des moyens complémentaires d'insertion permettant l'insertion du porte-capsule à partir de sa position détachée dans sa position d'injection dans l'unité d'alimentation.

Les moyens d'injection sont aussi configurés pour former un point d'injection de dimension suffisante pour permettre un dégazage rapide (fort débit) et à relativement faible vitesse. Les moyens d'injection comprennent de préférence une pointe d'injection unique. La pointe d'injection forme préférablement une ouverture dans la surface d'injection de la capsule d'au moins 1 mm de diamètre, de préférence entre environ 1.5 et 2.5 mm. Le but est de réaliser une ouverture suffisante pour réduire la vitesse d'échappement du gaz et augmenter le débit au moment de l'échappement. On réduit ainsi le temps de la détente tout en réduisant la puissance d'échappement donc le risque de projection de liquide hors de la capsule.

De préférence, la pointe d'injection est traversée par un conduit pour l'amenée du fluide d'injection dans la capsule. L'orifice du conduit peut être disposé dans l'axe du conduit ou légèrement incliné de manière à diriger le jet en direction du fond et de manière excentrée dans la capsule. Un tel dispositif facilite la réalisation de l'étanchéité autour du moyen d'injection, plus précisément, autour du conduit. Toutefois, il est possible d'envisager un conduit d'amenée du fluide sous pression et une pointe qui sont placés de manière séparée et un moyen assurant l'étanchéité qui entoure à la fois la pointe et l'entrée de fluide dans la capsule. Lorsque la pointe est traversée par un conduit, la pointe est de faible longueur de façon à éviter la remontée de liquide au travers de la pointe. La longueur utile de la pointe est ainsi de préférence comprise entre environ 2 et 10 mm, de préférence entre 4 et 7 mm.

Selon encore une autre caractéristique de l'invention, le support d'injection comprend une portion d'engagement en relief pour repousser ladite surface d'injection de la capsule vers l'intérieur de la capsule et diminuer ainsi le volume interne de la capsule. Le volume gagné par la portion d'engagement sur celui de la capsule permet de réduire le volume de gaz dans la capsule qui est susceptible ensuite de se comprimer lors la montée en pression dans la capsule et de ménager aussi un espace de compensation qui permet une détente au moins partielle de gaz à l'intérieur de la capsule lors du retrait du support d'injection mobile à la réouverture du dispositif. La portion d'engagement du support mobile peut par exemple être une portion de surface convexe. De préférence, la surface de la capsule est une membrane flexible facilement déformable sous l'effet de l'engagement de la portion d'engagement du support mobile.

Un moyen d'étanchéité peut être est prévu en association avec les moyens d'injection pour réaliser l'étanchéité au moins localement et directement entre lesdits moyens d'injection et la surface d'injection de la capsule.

La surface d'injection de la capsule peut être convexe en raison de la surpression de gaz dans celle-ci lorsque la capsule est hermétiquement fermée avant utilisation. La pression de gaz peut provenir du dégazage des ingrédients après le scellage de la capsule (par exemple, du dioxyde de carbone) ainsi que du gaz inerte inséré dans la capsule lors de la fabrication. Au contraire, la surface d'injection peut être concave en raison d'un vide partiel réalisé dans la capsule au moment du remplissage et de la fermeture lors de la fabrication. La surface d'injection peut encore être convexe ou concave pour toute autre raisons. Par exemple, la surface d'injection peut être convexe par déformation en raison de la masse d'ingrédients contenue dans la capsule.

Les moyens complémentaires d'insertion du porte-capsule dans l'unité d'alimentation du dispositif comprennent des nervures associées à des rainures de guidage. En dehors de la facilité d'utilisation et de la simplicité, un autre avantage en rapport avec l'invention est de permettre un retrait du porte-capsule par rapport à l'unité d'alimentation en maintenant la capsule dans la position inclinée de manière à permettre un dégazage suffisant sans risque d'effet "geyser".

La nervures et/ou nervures de guidage sont préférentiellement rectilignes. Elles peuvent être continues ou former des portions discontinues pour autant qu'un guidage en translation selon une direction privilégiée d'insertion est effectué.

Selon un premier mode possible de réalisation, les moyens d'insertion de l'unité d'alimentation sont dirigés selon un plan incliné par rapport au plan horizontal de telle sorte que le porte-capsule est guidé dans la direction dudit plan incliné lors de son insertion et retrait de l'unité d'alimentation et ainsi de manière à maintenir la surface d'injection de la capsule selon ledit angle d'inclinaison. Les moyens complémentaires d'insertion forment des nervures/rainures dont l'épaisseur est sensiblement constante par exemple, c'est à dire, dont les arêtes inférieure et supérieure de guidages de chaque côté du porte-capsule sont sensiblement parallèles entre elles.

Selon un deuxième mode possible de réalisation, les moyens complémentaires d'insertion sont en forme de coin. Ceci peut avoir plusieurs avantages. Un premier avantage est de pouvoir guider l'insertion du porte-capsule selon un plan sensiblement horizontal tout en maintenant la surface d'injection de la capsule dans la direction dudit plan incliné. Un deuxième avantage est de pouvoir assurer au moins une partie des forces de serrage du porte-capsule en position d'insertion par la pression du fluide dans la capsule. De ce fait, les forces de serrage mécanique par les éléments mécaniques de fermeture du dispositif à appliquer sur le porte-capsule peuvent plus faible. Un autre avantage est de permettre une réduction progressive de la distance entre le moyen d'injection et la capsule; ce qui réduit le risque de déchirure de la capsule et facilite l'insertion du porte-capsule dans le dispositif.

Par exemple, les moyens d'insertion en forme de coin comprennent des rainures ou nervures de guidage du porte-capsule dont les arêtes inférieure et supérieure de chaque côté convergent formant ainsi une épaisseur variable. Les moyens d'insertion de l'unité d'alimentation comprennent alors des rainures ou nervures de guidage ayant une forme sensiblement complémentaire. De préférence, les arêtes inférieures et supérieures convergent dans la direction d'insertion.

Selon un mode de réalisation, les moyens d'injection comprennent une seule pointe d'injection supportée par un support d'injection mobile en engagement relativement à la capsule.

Selon un aspect de l'invention, un moyen local d'étanchéité peut être associé à ladite pointe d'injection. Par "moyen local" il faut entendre un moyen disposé à proximité de la pointe d'étanchéité en engagement sur la surface de la capsule autour de la pointe de manière à éviter au liquide de fuir contre la surface externe de la capsule. Le moyen peut s'étendre plus ou moins sur la surface de la capsule à partir du point d'injection. Le moyen local d'étanchéité est de préférence un moyen élastique permettant de compenser les variations d'écartement et/ou les jeux possibles liés à la pression exercée par le fluide à la surface de la capsule. Le moyen d'étanchéité peut être une bague ou une paroi en élastomère ou silicone entourant la base de ladite pointe d'injection, par exemple. La bague ou paroi peut avoir un diamètre compris entre 2 et jusqu'à l'équivalent de la surface d'injection de la capsule.

Le moyen d'étanchéité peut aussi s'étendre sur le support mobile pour s'appliquer sensiblement contre toute la surface d'injection de la capsule. Il peut s'agir dans ce cas, d'un revêtement en matériau élastomère ou silicone qui recouvre la surface du support d'injection en contact avec la surface d'injection de la capsule.

Selon une caractéristique de l'invention, des moyens de serrage sont prévus pour associer le porte-capsule au serrage dans l'unité d'alimentation. Pour cela, les moyens de serrage comprennent une surface de serrage agissant au serrage sur la capsule et/ou le porte-capsule de manière dissociée par rapport à la fonction d'étanchéité propre sur la surface d'injection de la capsule. Les moyens de serrage comprennent aussi des moyens d'actionnement qui peuvent être réglés de façon à prendre une position de serrage stable du support mobile contre au moins une surface d'appui non-déformable de la capsule, de préférence, la bordure de la capsule en appui sur les bords de serrage du porte-capsule. Les moyens d'actionnement comprennent, par exemple, des moyens à genouillère, à engrenage ou à came, actionnables manuellement.

L'invention se rapporte aussi au dispositif en tant que tel indépendamment de la capsule. Pour cela, le dispositif comprend: - un porte-capsule comprenant un logement pour recevoir une capsule, - une unité d'alimentation en fluide d'injection comprenant une embase fixe et un support d'injection mobile relativement à l'embase et actionnable en engagement par rapport au porte-capsule sur lequel sont agencés des moyens d'injection pour injecter un fluide d'injection dans la capsule après engagement du support relativement au porte-capsule. Le porte-capsule est positionné dans l'unité d'alimentation en position d'injection selon un plan incliné inférieur à 45 degrés relativement au plan horizontal. Le support mobile est déplaçable en engagement relativement au porte-capsule pour disposer les moyens d'injection de manière excentrée par rapport à l'axe central du support mobile et du côté sensiblement le plus relevé dans le logement du porte-capsule tandis que le porte-capsule est maintenu en position inclinée dans l'unité d'alimentation.

L'invention se rapporte aussi à un porte-capsule en tant que tel.

Le porte-capsule est ainsi destiné à être inséré dans une unité d'alimentation de fluide pour la préparation d'un liquide à partir d'une capsule contenant au moins une substance alimentaire. Le porte capsule comprend: un logement pour recevoir une capsule, une extrémité libre et des moyens d'insertion dans l'unité d'alimentation comprenant au moins une portion de nervure et/ou rainure de guidage. Ladite portion de nervure et/ou rainure de guidage possède, de préférence, une épaisseur variable formant ainsi un moyen d'insertion linéaire en forme de coin.

De préférence, la portion de nervure ou rainure comprend une paire d'arêtes inférieures qui convergent en direction d'une paire d'arêtes supérieures et vers l'extrémité libre du porte-capsule.

De préférence, le moyen d'insertion est formé de deux portions de nervure et/ou rainure disposées de part et d'autre du logement.

Comme il a déjà été expliqué un tel moyen d'insertion a une fonction de serrage mécanique avec l'unité d'alimentation sous l'effet combiné de la géométrie dudit moyen d'insertion et du fluide mis sous pression dans la capsule. Une autre fonction de ce moyen est qu'il permet de maintenir le porte-capsule selon une configuration inclinée en position d'insertion pour maintenir un volume d'air au niveau du point d'injection; ce qui réduit le risque de résurgence de liquide sous pression au moment du désengagement des moyens d'injection avec la capsule.

De préférence, l'épaisseur des dites nervures ou rainures des moyens d'insertion comprennent une paire d'arêtes inférieures qui convergent, de préférence, en direction d'une paire d'arêtes supérieures et vers l'extrémité libre du porte-capsule. Les arêtes inférieures et supérieures servent de guidage pour l'insertion du porte-capsule dans l'unité d'alimentation et sont ainsi préférablement rectilignes.

De préférence, les arêtes supérieures et inférieures font un angle d'environ 5 à 20 degrés.

Le porte-capsule possède aussi préférablement un manche du côté opposé à l'extrémité libre permettant de facilité la manipulation du porte-capsule.

Dans une alternative possible, le moyen d'injection pourrait faire partie du porte-capsule.

D'autres caractéristiques du dispositif de l'invention font partie de la présente description.

L'invention concerne aussi une méthode pour diminuer les résurgences de liquide ou de mélange gaz-liquide au travers d'au moins un point d'injection d'une capsule dues à la surpression créée lors de l'injection d'un fluide sous pression par des moyens dans la capsule lors de la préparation d'un liquide alimentaire; la méthode comprenant: le perçage d'une surface d'injection de la capsule en déplaçant un moyen d'injection relativement à la capsule, le maintien durant l'injection de la capsule en position légèrement inclinée par rapport au plan horizontal en plaçant le point d'injection de la capsule plus haut que le centre de ladite surface.

De préférence, selon la méthode de l'invention, les moyens d'injection sont désengagés par rapport à la capsule en maintenant la capsule selon la même position inclinée. La surface d'injection de la capsule est, de préférence, maintenue inclinée selon un angle compris entre 5 et 20 degrés par rapport au plan horizontal.

La capsule peut être formée d'un corps en matériau rigide ou semi-rigide fermée par une membrane souple étanche à l'air. Il peut encore s'agir d'un sachet en matériau perméable à l'air tel qu'en papier filtre ou encore d'une combinaison d'une capsule souple et d'un sachet souple.

**Brève description des figures:**

D'autres caractéristiques et avantages de la présente invention apparaîtront à la lecture de la description qui va suivre, donnée à titre d'exemple non limitatif et en référence aux dessins annexés dans lesquels:

La figure 1 est une vue simplifiée générale d'un système de préparation de liquide selon l'invention;

La figure 2 montre une vue en perspective du dispositif selon un premier mode de réalisation, en particulier de l'unité d'alimentation en position ouverte et du porte-capsule en position détachée;

La figure 3 montre une vue en perspective comme à la figure 2, avec le porte-capsule en position d'insertion et l'unité d'alimentation en position ouverte;

La figure 4 montre une vue en perspective comme figures 2 et 3, en position fermée de l'unité d'alimentation, c'est à dire en position d'injection;

La figure 5 montre une vue en coupe transversale selon le plan P de la figure 4 en position ouverte;

La figure 6 montre une autre vue en coupe transversale selon P en position d'injection;

La figure 7 montre une vue schématique de la surface d'injection de la capsule;

La figure 8 montre une vue en perspective du dispositif selon un second mode de réalisation, en particulier de l'unité d'alimentation en position ouverte et du porte-capsule en position détachée;

La figure 9 montre une vue en perspective comme à la figure 7, avec le porte-capsule en position d'insertion avant engagement des moyens d'injection contre le porte-capsule;

La figure 10 montre une vue en coupe selon l'axe médian longitudinal de la figure 8 en position de fermeture de l'unité d'alimentation.

**Description détaillée de l'invention**:

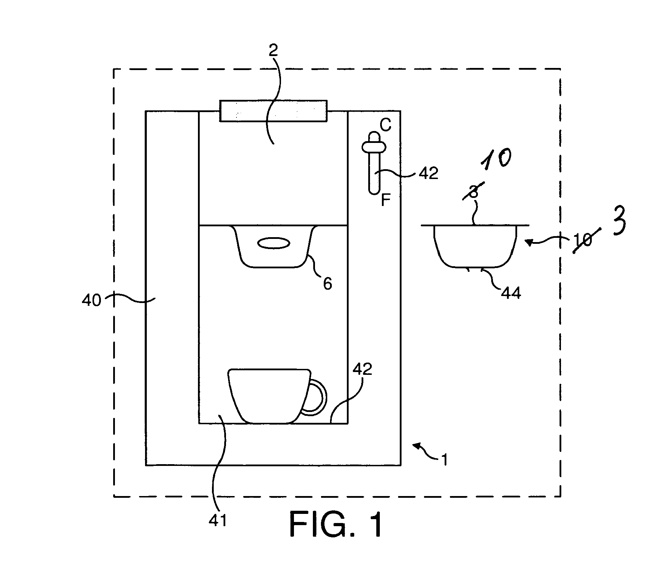

La figure 1 montre sous forme simplifiée un système pour la distribution de liquides préparés à partir de capsules comprenant un dispositif ou appareil 1 et une capsule 3 adaptée audit dispositif. Le liquide peut être une boisson chaude ou froide telle que du café, cappuccino ou du thé ou une autre préparation alimentaire telle que des sauces, soupes ou autres.

Chaque capsule contient un ou plusieurs ingrédients alimentaires sous forme solide, liquide, gélifiée ou pâteuse. Il peut s'agir, par exemple, de poudre de café rôti-moulu, de café soluble, de poudre ou de concentré liquide de lait, de cacao ou de thé en feuille ou sous forme soluble.

La capsule est avantageusement du type de celle décrite dans le brevet EP1472156B1. En particulier, la capsule 3 peut comprendre une paroi d'injection 10 sous forme d'une membrane flexible au travers de laquelle est injecté le fluide (c'est à dire, une quantité d'eau chaude ou froide) à partir de l'unité d'alimentation et un conduit 44 destiné à guidé le liquide préparé directement dans la tasse. La membrane peut être rattachée sur un bord de scellage du corps de la capsule. La capsule peut comprendre une chambre interne étanche à l'air contenant les ingrédients. La chambre peut être perforée sous l'effet de la montée en pression du fluide injecté dans la chambre pour laisser passer le liquide préparé. La perforation pour la délivrance du liquide peut se faire par des moyens de perforation propres à la capsule en association avec au moins une membrane interne de la chambre. La perforation peut s'effectuer par déformation de la membrane interne contre les moyens de perforation jusqu'à atteindre la tension de rupture du matériau de la membrane. L'ouverture de la capsule pourrait encore se faire par éclatement d'une membrane de sortie, lors de la montée sous pression du liquide dans la capsule, c'est à dire, sans élément interne de perforation. Un avantage de la capsule est de pouvoir réaliser une extraction, dissolution ou percolation sous une pression contrôlée, de l'ordre de 4 à 20 bar, à l'intérieur de la capsule en retardant l'écoulement des ingrédients et en améliorant l'interaction des ingrédients avec le fluide sous pression. Ce principe permet de créer plus de mousse qu'avec des procédés de percolation à basse pression. Un autre avantage est de pouvoir, en même temps, limiter le contact entre le liquide et le dispositif tel qu'il est décrit dans le brevet EP1472156B1. Bien entendu, l'invention n'est pas limitée à l'utilisation de la capsule selon ce brevet. Par exemple, la membrane et les moyens d'ouverture peuvent être remplacés par un élément filtrant par exemple tel qu'un filtre en papier et/ou plastique et un support de filtre comprenant des canaux de collecte et/ou des ouvertures de distribution du liquide.

Il est entendu que le dispositif selon l'invention pourrait être utilisé en relation avec tout type de capsules y compris des capsules sous forme de sachet-filtres ("pods") pour système de préparation d'une boisson sous basse pression.

Dans la présente description, le terme "fluide d'injection" se rapporte essentiellement à de l'eau chaude ou froide ou encore à un mélange d'eau et d'air.

Le dispositif peut comprendre un bâti 40 dans lequel est montée une unité d'alimentation en fluide sous pression 2 et comprend un porte-capsule 6 détachable du dispositif. Sous le porte-capsule est agencée une zone de service 41 qui comprend, par exemple, un support de tasse 42. Le dispositif comprend, par ailleurs, une réserve d'eau telle qu'un réservoir amovible, associée à une pompe, un chauffe-eau et un circuit de fluide permettant d'alimenter l'unité d'alimentation de fluide 2 en eau chaude et/ou froide selon les besoins. Le dispositif comprend par ailleurs un moyen de commande, plus ou moins sophistiqué, permettant à l'utilisateur de sélectionner selon un choix sélectif préétabli plusieurs options de préparations chaudes et/ou froides et/ou plusieurs volumes de boissons à distribuer. Le moyen de commande peut être associé à un contrôleur lequel commande sélectivement la mise en marche de la pompe, du chauffe-eau et de vanne(s) associée(s) au circuit de fluide. Le moyen de commande peut être un moyen du type à levier, vanne ou encore un ou plusieurs boutons de commande.

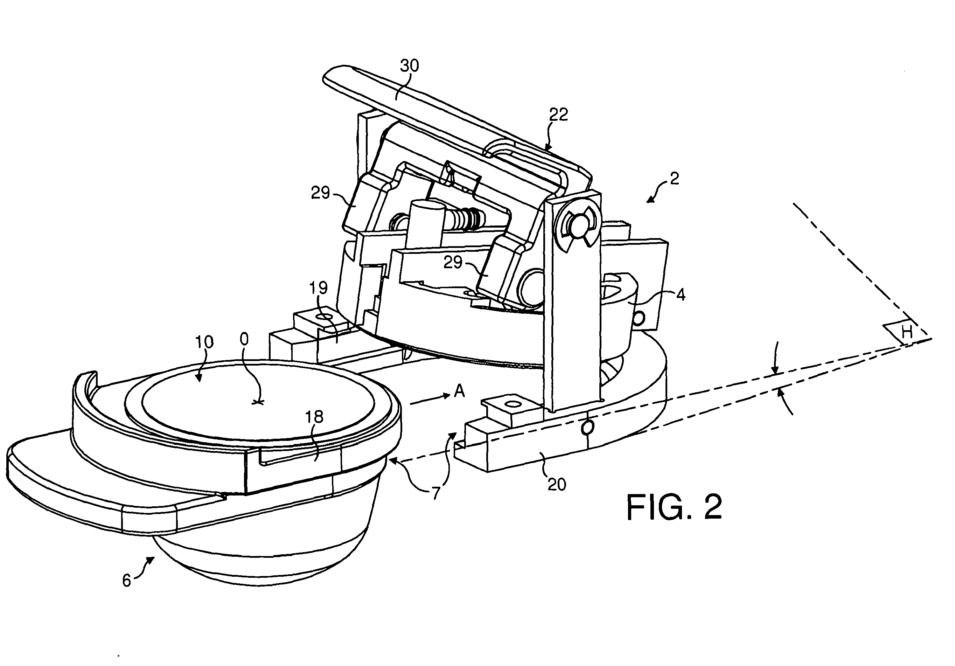

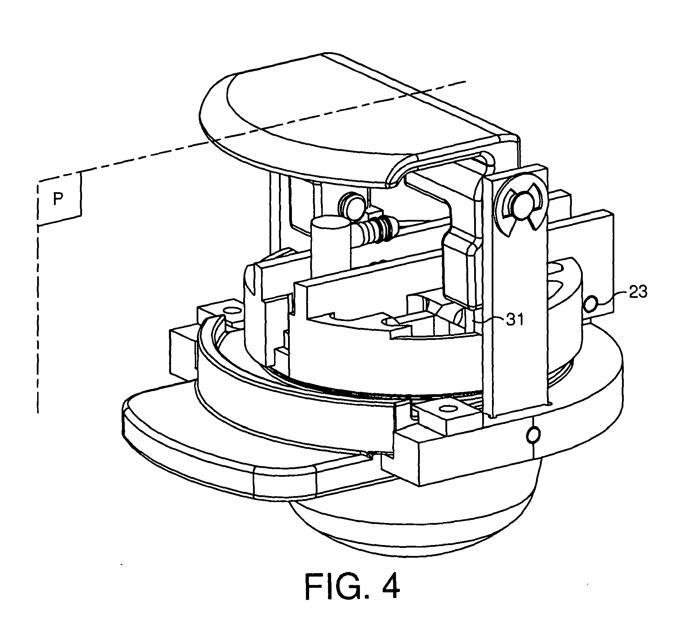

Les figures 2 à 7 montrent un premier mode de réalisation du dispositif selon l'invention. Le porte-capsule 6 et l'unité d'alimentation en fluide sous pression 2 comprennent des moyens complémentaires d'insertion 7 configurés pour permettre l'insertion du porte-capsule 6 selon une direction privilégiée A dans l'unité. Les moyens 7 sont tels que le porte-capsule peut être détaché du dispositif. Par "détachable", on entend que le porte-capsule n'est relié en position "détachée" au dispositif, en particulier, à l'unité d'alimentation 7, par aucun moyen de connexion permanent et peut être transporté librement pour être vidé de sa capsule une fois celle-ci utilisée et pour être rechargé avec une nouvelle capsule 10. Le porte-capsule peut ainsi être rincé ou nettoyé facilement afin d'éliminer tout résidu alimentaire de sa surface.

Toutefois, l'invention peut se rapporter aussi à un porte-capsule non-détachable par rapport au dispositif ou à l'unité d'alimentation mais insérable à partir d'une position de tiroir ouvert dans l'unité d'alimentation. Une configuration de "tiroir ouvert" signifie que la course du porte-capsule est stoppée par des moyens d'arrêt permettant le chargement d'une capsule sans devoir retirer complètement le porte-capsule. Il est entendu que le porte-capsule peut aussi être agencé de manière à prendre une position de tiroir ouvert et être détachable au besoin, pour le nettoyage, par exemple.

Les moyens complémentaires d'insertion 7 du porte-capsule dans l'unité d'alimentation peuvent être de différentes formes. Les moyens complémentaires sont préférablement arrangés pour permettre une insertion directe et sensiblement linéaire du porte-capsule dans l'unité d'alimentation par simple poussée de l'utilisateur sur le porte-capsule dans la direction d'insertion A. Le porte-capsule se trouve positionné dans une position de référence dans l'unité d'alimentation avant déplacement et en engagement des moyens d'injection avec la capsule.

Selon un mode pratique possible, les moyens d'insertion comprennent des nervures de guidage 18 et des rainures de guidage 19 complémentairement formées, respectivement, sur les côtés du porte-capsule 6 et sur les côtés internes de l'embase 20 de l'unité d'alimentation. Selon le principe de l'invention, lesdits moyens d'insertion 7 s'étendent latéralement et de préférence selon une direction légèrement inclinée par rapport au plan horizontal H. De ce fait, le porte-capsule s'insère dans l'unité d'alimentation dans une configuration légèrement inclinée vers le bas.

Du côté de l'unité d'alimentation de fluide 2, l'embase 20 est fixée au dispositif de manière non-mobile. Sur cette embase 20 est monté un support d'injection 4 sous forme d'un disque lequel est mobile relativement à l'embase. Le support d'injection dit "support mobile" dans le reste de la description selon ce mode de réalisation se déplace sous l'effet de moyens d'actionnement 22 faisant partie des moyens de serrage le long de l'embase et selon une cinématique combinant une rotation et un déplacement axial; ceci permettant une application plus facile du support contre le porte-capsule et la capsule et de compenser les tolérances et jeux fonctionnels.

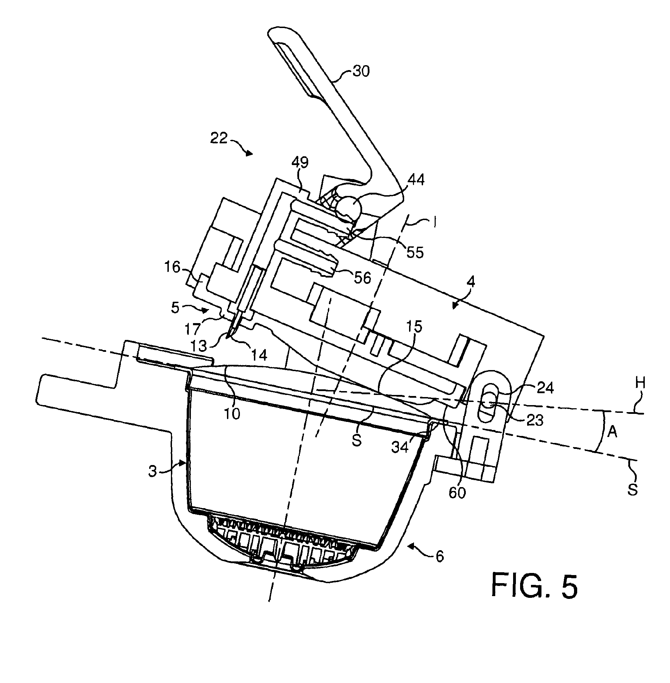

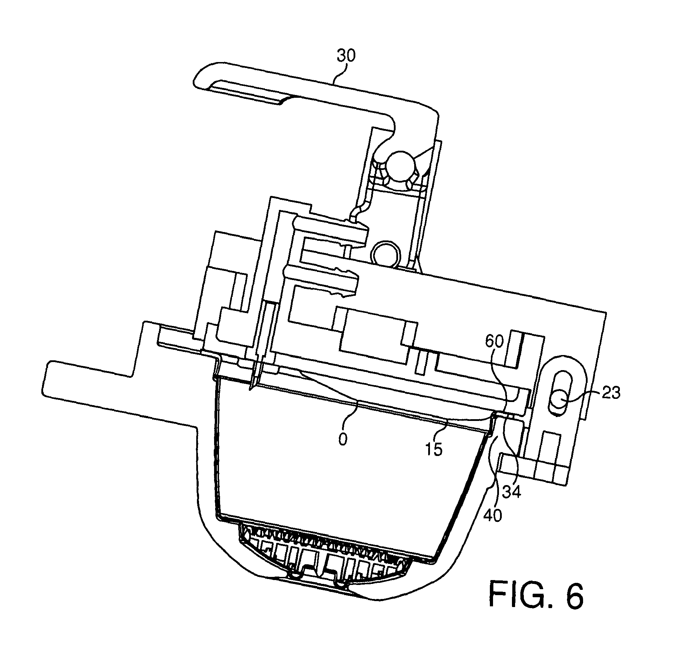

Le support mobile 4 comprend des moyens d'injection 5 lesquels sont de préférence positionnés de manière excentrée par rapport à l'axe central I du support mobile (figure 5). L'axe central I du support mobile s'aligne ensuite avec le centre O de la surface d'injection de la capsule après l'engagement des moyens d'injection par abaissement du support 4 (figure 6).

Le support mobile 4 est monté à l'embase 20 selon un axe d'articulation 23 situé sur le côté avant du support et agencé en guidage axial de telle manière à permettre un déplacement combiné, à la fois axial et en rotation, du support mobile contre le porte-capsule. Comme le montre la figure 5, le support mobile comprend un axe parallèle au plan transversal du support 4, monté dans un ou plusieurs logements de guidage axial ou lumières 24 de l'embase permettant à la fois un mouvement du support selon une direction en rotation et une direction en translation axiale. Les avantages sont essentiellement liés à une adaptation permettant la compensation des jeux fonctionnels en évitant les usures par rapport à une cinématique purement linéaire et axiale tout en permettant un désengagement des bords 34 de la capsule par rapport au support mobile lors de la réouverture.

L'actionnement du support mobile de sa position ouverte, c'est à dire éloignée du porte-capsule à sa position d'injection est opéré par un système d'actionnement 22. Différents systèmes d'actionnement peuvent être envisagés. Selon le mode représenté, le moyen d'actionnement est une genouillère 29 associée à un levier manuel 30. Dans un mode automatisé, le levier pourrait être remplacé par un moteur. De préférence, les systèmes d'actionnement sont situés verticalement au dessus du support mobile et sont rattachés à l'embase. Plus précisément, le levier 30 comprend deux bras 86, 87 espacés latéralement et articulés, d'une part à l'extrémité des deux branches 24, 25 de l'embase fixe par deux axes fixes espacés latéralement 44, et, d'autre part, à une paire de bras 31 de la genouillère par deux autres axes mobiles 46.

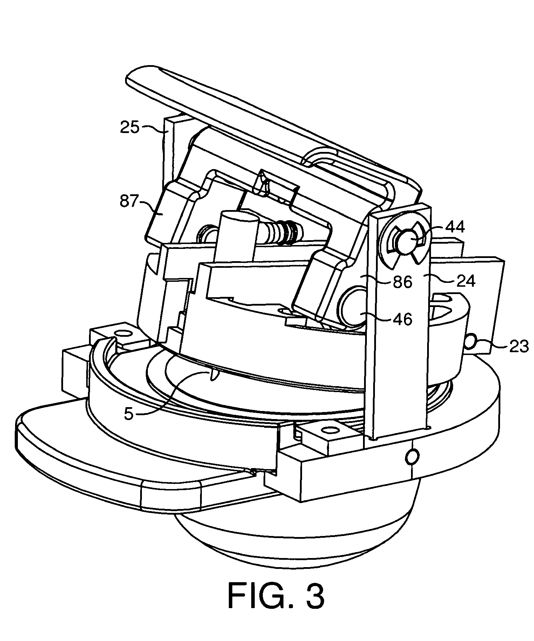

Il faut noter que le système d'actionnement 22 est, de préférence, associé à un moyen de rappel élastique (non représenté). Le moyen de rappel élastique peut être associé au levier et/ou à la genouillère de manière à replacer automatiquement le support d'injection en position haute ou à distance du porte-capsule en l'absence de forces de réaction exercées sur les moyens d'actionnement par les bords pincés de la capsule permettant le verrouillage du support par les d'actionnement et de verrouillage. Le moyen de verrouillage peut aussi être placé entre l'embase fixe et le support mobile 4. Comme exemple de moyen de rappel élastique, un ressort est prévu pour ramener le levier automatiquement en position relevée selon la figure 3 en l'absence soit du porte-capsule soit de la capsule dans le porte-capsule si celui-ci est inséré sans capsule dans la position de la figure 3.

La figure 5 montre le détail de l'unité d'alimentation en fluide et de l'agencement du porte-capsule dans l'unité d'alimentation avec le support mobile d'injection 4 en position relevée.

Selon un mode préférentiel de l'invention, les moyens d'injection 5 sont de mode intrusif dans la capsule. Autrement dit, les moyens d'injection traversent la surface d'injection de la capsule et se prolongent au moins partiellement à l'intérieur de la capsule. Ils peuvent comprendre par exemple une pointe d'injection 13 solidaire du support mobile 4 qui perfore ou découpe la face supérieure de la capsule. Au départ, la surface d'injection 10 de la capsule peut être légèrement convexe. La pointe est traversée par un conduit 14 d'amenée du fluide d'injection (eau chaude ou froide) dans la capsule. La pointe d'injection se prolonge au travers du support et du côté opposé à la capsule par un ou plusieurs connecteurs 49. Une dérivation d'un connecteur peut être prévue par deux entrées 55, 56 séparées permettant une alimentation de fluide chaud et une alimentation de fluide à température ambiante ou froide. Les entrées sont reliées à des tubes souples d'alimentation reliés, quant à eux, au reste du système de fluide (non représentés). La sélection en fluide chaud ou froid pour alimenter les moyens d'injection peut être opérée par une ou plusieurs vannes (non représentées). Comme le montre la figure 5, la pointe d'injection se termine par un orifice de sortie de faible section, de préférence inférieure à 0.5 mm, permettant de diriger un jet de fluide à grande vitesse à l'intérieur de la capsule. De préférence, l'orifice est dirigé axialement par rapport au conduit 14 et en direction du fond de la capsule, une fois inséré dans celle-ci (figure 6). La position excentrée, la direction et la haute vitesse du jet contribuent à générer une circulation turbulente du fluide à l'intérieur de la capsule et donc vise à améliorer la dissolution ou la dispersion de certains ingrédients y compris avec l'eau froide comme fluide injecté.

Selon une possibilité de l'invention, le moyen d'injection comprend un moyen d'étanchéité 16 sous forme d'un revêtement en matériau élastique s'étendant sous toute la surface du support d'injection 4.

Le moyen d'injection peut comprendre une portion annulaire en relief 17 entourant localement la base de la pointe d'injection. Ceci permet d'améliorer l'étanchéité localement autour de la pointe par augmentation de la pression locale dans la surface d'injection de la capsule à cet endroit lors de l'engagement des moyens d'injection.

Le moyen d'étanchéité peut être un revêtement en matériau élastomère, en silicone ou en matériau plastique de faible dureté et élastiquement flexible.

Il faut comprendre que la face d'injection de la capsule peut aussi être flexible. La surface peut être au départ légèrement convexe en raison de la présence de gaz contenu dans la capsule puis se déforme, dans ce cas, en partie sous l'effet de la pression mécanique axiale exercée par le moyen d'étanchéité 16. L'étanchéité par compensation des jeux est obtenue par l'association du moyen d'étanchéité 16 et la déformation de la face d'injection de la capsule. La déformation de la face d'injection intervient lors de la mise sous pression de la capsule par le fluide d'injection. Il se crée alors des forces internes de poussée dans la capsule en direction du moyen d'étanchéité pour plaquer la surface 10 de la capsule contre ledit moyen. De ce fait, toute la surface d'injection de la capsule est plaquée de manière étanche contre la surface du revêtement d'étanchéité. Ceci a aussi pour avantage qu'une capsule même endommagée, c'est à dire avec une surface d'injection accidentellement percée pourrait fonctionner dans le dispositif.

Le revêtement 16 pourrait être remplacé par un élément discret tel qu'une bague en matériau élastique localisée seulement autour de la pointe.

Grace à l'étanchéité réalisée par la surface élastique du support, le fluide injecté sous pression au travers de la pointe d'injection est bloqué directement au niveau de la base de l'orifice pratiqué par la pointe, ou à sa proximité immédiate, et ne peut donc pas ressortir entre la surface 10 de la capsule et celle du support mobile 4. On réduit aussi les surfaces du dispositif en contact avec le liquide en évitant des remontées possibles de liquide. Le système est aussi ainsi rendu étanche par rapport au porte-capsule et de manière indépendante du serrage du porte-capsule proprement-dit dans le dispositif.

Selon une caractéristique déjà évoquée, le support mobile d'injection 4 et le moyen d'injection sont verrouillables en position d'injection par des moyens de serrage, en particulier, le système d'actionnement 22 selon une portion de serrage 60 que lorsque le porte-capsule contient une capsule et le porte-capsule est inséré dans l'unité d'alimentation de fluide. Le support mobile 4 comprend une portion de surface de serrage 60 qui s'appuie sur une bordure 34 de la capsule. La bordure 34 repose elle-même en appui sur des bords d'appui ou de serrage 40 du porte-capsule. La bordure est donc pincée entre la portion 60 et les bords 40 du porte-capsule. Les moyens d'actionnement, en particulier, la genouillère actionnée pas le levier exerce donc des forces de serrage en compression qui sont transmises par le support mobile 4 à la bordure de la capsule. Le verrouillage de la genouillère obtenu par le passage du point "dur" de celle-ci ne se fait que si une capsule est donc présente dans le porte-capsule créant ainsi une surépaisseur nécessaire pour forcer le passage du point "dur" de la genouillère et donc obtenir une position stable de serrage du support. Ce serrage est important pour permettre d'assurer une sécurité dans l'immobilisation du porte-capsule dans le mode de fonctionnement sous pression de fluide dans la capsule. Le serrage contribue aussi à maintenir fermement la bordure 34 de scellage de la capsule sans risque de délaminage de sa membrane 10 par rapport à la bordure du corps de la capsule.

En cas d'absence de capsule ou de porte-capsule, l'abaissement du support mobile 4 au moyen du levier agissant sur la genouillère ne génère pas d'appui et donc ne génère pas des forces de réaction suffisantes sur la genouillère. Du fait de la présence d'un moyen de rappel élastique en association avec le levier et/ou la genouillère, le levier bascule en direction de la réouverture; ce qui fait remonter la genouillère à partir du moment où plus aucun appui n'est exercé sur le levier par l'utilisateur. Il est donc impossible de maintenir le support mobile en position stable abaissée lorsque le porte-capsule est enlevé ou la capsule n'est pas engagée dans le porte-capsule. Celui-ci est donc ramené en position d'ouverture; permettant ainsi le dégagement du porte-capsule ou bien l'insertion du porte-capsule avec sa capsule dans le dispositif.

On comprend que les efforts de serrage sur le porte-capsule dans l'unité d'alimentation ne sont pas supportés essentiellement par le moyen d'étanchéité. Il s'agit d'un avantage puisque la fonction d'étanchéité est en partie dissociée de la fonction de serrage du porte-capsule dans l'unité; cette dernière ayant pour fonction d'éviter un désengagement possible du porte-capsule alors que le dispositif est sous pression. Cela permet aussi de réaliser l'étanchéité sur une partie flexible de la capsule et au plus près du point d'injection sans risquer de rupture de la surface d'injection de la capsule notamment lorsque celle-ci est une membrane flexible. Il s'ensuit que le moyen d'étanchéité est aussi moins sollicité en compression et donc garde plus longtemps ses propriétés de résilience et donc d'étanchéité.

Bien entendu, les moyens d'actionnement et de verrouillage du support mobile pourraient être d'une autre structure qu'une genouillère. Il pourrait s'agir par exemple d'une came ou d'une série d'engrenages.

L'épaisseur du support mobile peut être réglée par des moyens de réglage. Le réglage peut être nécessaire pour assurer le bon fonctionnement des moyens d'actionnement en tenant compte des phénomènes d'usure, de tolérances, de dilatation possible due à la chaleur, sur différents composants formant le système, à savoir, la capsule et le dispositif lui-même. Le réglage permet par exemple de régler la force de passage nécessaire à faire passer à la genouillère son point "dur". Les moyens de réglage permettent de régler la force de fermeture des moyens d'actionnement et influence donc la force exercée par les moyens d'injection contre la surface de la capsule pour assurer une bonne étanchéité sous des conditions de pressions élevées dans la capsule.

Un problème de l'invention consiste à réduire le risque de créer un jet de liquide en dehors et du côté de la face d'injection de la capsule après le retrait des moyens d'injection, plus précisément de la portion intrusive de la pointe d'injection, en dehors de la capsule. Ce phénomène se produit en général, d'une part, du fait que la capsule contient un volume de gaz comprimé lors de la mise en pression du fluide dans la capsule; volume qui ensuite se détend brusquement lors du désengagement des moyens d'injection.

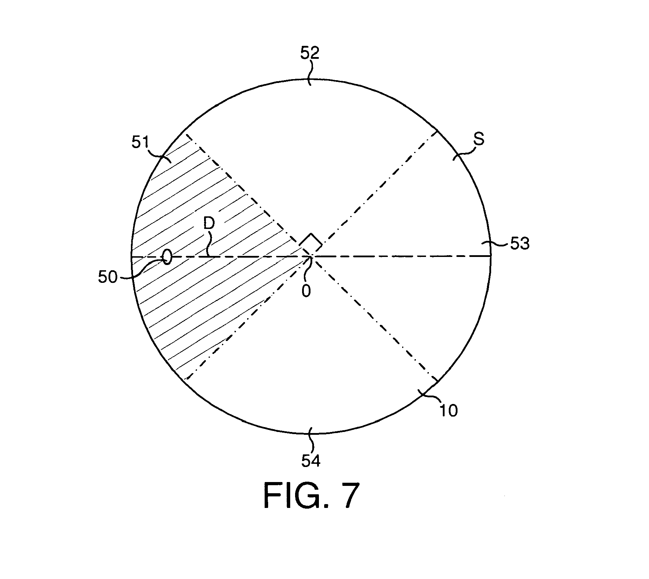

Pour palier à cet inconvénient, le dispositif selon l'invention propose une solution qui consiste, d'une part, à maintenir le porte-capsule 6 dans une configuration inclinée de quelques degrés par rapport au plan horizontal H de façon à incliner sensiblement la surface d'injection 10 de la capsule par rapport à ce même plan horizontal et, d'autre part, à placer les moyens d'injection 5 sur le côté sensiblement le plus relevé de la surface 10 de la capsule ou du porte-capsule, de manière à conserver une bulle de gaz à l'endroit du point d'injection. La figure 7 montre la représentation de la surface d'injection 10 et le point d'injection 50. Pour déterminer l'inclinaison de la surface d'injection selon l'invention et compte tenu de la possible convexité ou concavité de ladite surface, on prend comme convention la surface plane projetée S, partant des bords 34 de la capsule, comme surface de référence de la surface d'injection. Cette surface S considérée comme "surface d'injection" par définition fait un angle A par rapport au plan horizontal H comme le montre la figure 5. La surface est matérialisée par quatre quadrants fictifs 51, 52, 53, 54, une fois la capsule mise en place dans le porte-capsule et celui-ci correctement inséré dans l'embase. De préférence, le point d'injection est placé à l'intérieur du quadrant 51 situé le plus haut par rapport au plan horizontal. De manière encore plus préférentielle, les moyens d'injection sont disposés de manière à ce que le point d'injection soit situé dans l'alignement du côté du segment de droite D (passant par le centre) le plus incliné par rapport au plan horizontal. De préférence, l'angle d'inclinaison de la surface S est compris entre 2 et 25 degrés, plus préférentiellement encore, de l'ordre de 5 à 20 degrés.

Une solution complémentaire consiste aussi à diminuer le volume interne de la capsule avant l'injection et à rétablir le volume de la chambre au moment du retrait des moyens d'injection de la capsule. Cette variation de volume de la capsule permet de créer un volume d'absorption suffisant qui permet de compenser en partie au moins la surpression à l'intérieur de la capsule. La détente de gaz ne se produit alors plus brutalement en propulsant un jet de liquide à l'extérieur de la capsule mais le gaz tend à s'expanser au moins en partie dans un volume déformable de la capsule après le retrait des moyens d'injection.

Pour cela, il est prévu une portion d'engagement 15 en relief du support mobile qui est configurée pour repousser la paroi 10 de la capsule vers l'intérieur de la capsule et diminuer ainsi le volume interne de la capsule. La surface d'engagement fait partie de la paroi inférieure 16 du support mobile. La surface d'injection de la capsule étant suffisamment flexible, par exemple, une membrane de quelques dixièmes de millimètres, celle-ci se déforme au contact de la portion d'engagement en relief 15 du support mobile lors de la mise en position d'injection. Comme le montre la figure 6, lors de la fermeture de l'unité d'injection contre le porte-capsule, la portion d'engagement en relief 15 repousse la membrane de la capsule vers l'intérieur pour la rendre concave. La portion d'engagement 15 peut être faite d'un matériau élastique faisant office d'élément d'étanchéité sur la surface de la capsule comme déjà discuté.

Lorsque le support mobile 4 est désengagé du porte-capsule, la portion d'engagement 15 n'exerce plus de poussée contre la capsule et la surface d'injection tend à reprendre en partie au moins sa position d'origine par l'effet de détente du gaz à l'intérieur de la capsule.

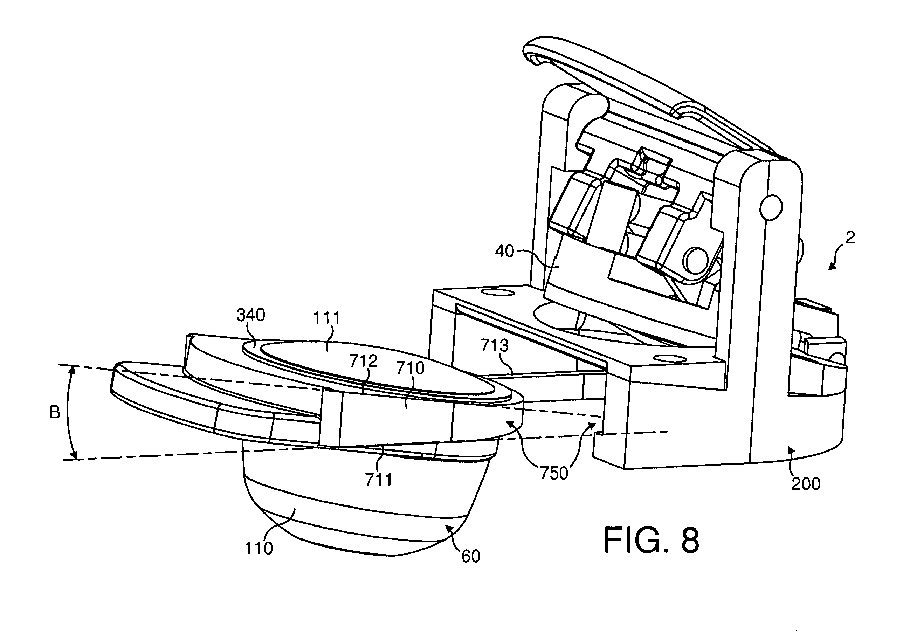

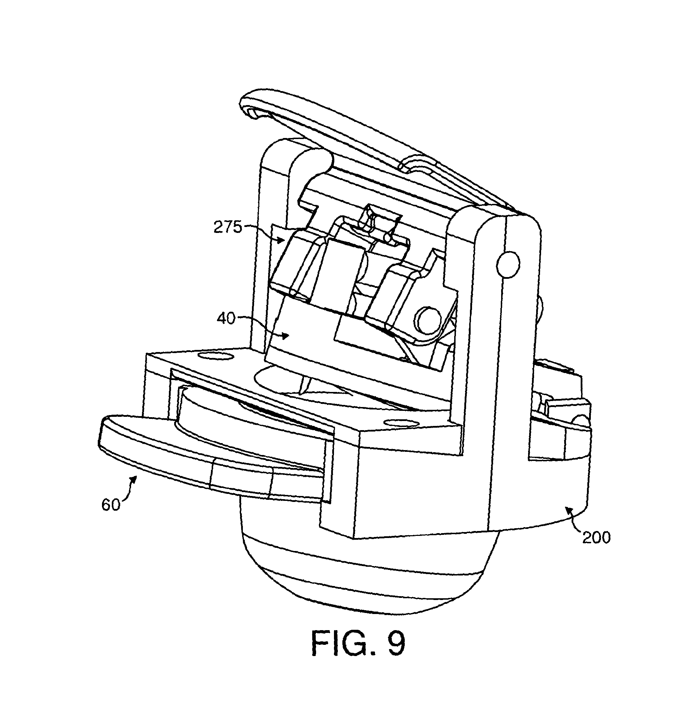

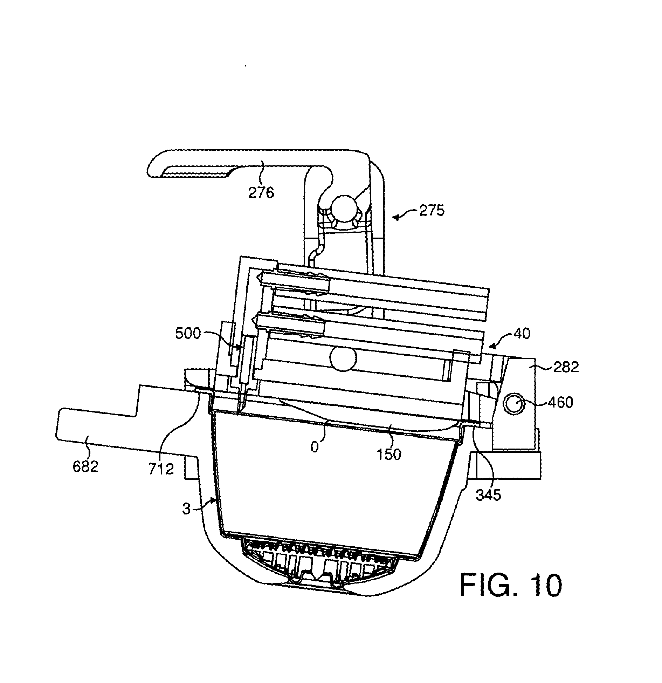

Un second mode possible de réalisation est illustré aux figures 8 à 10. Dans ce cas, le porte-capsule 60 et l'embase 200 de l'unité d'alimentation sont munis de moyens d'insertion complémentaire en forme de coin 750. Le porte-capsule est agencé pour être inséré le long des bords de l'unité d'alimentation par simple glissement. Le porte-capsule possède un manche 682 pour une manipulation aisée lors de l'insertion et du retrait. Le principe de ces moyens est de permettre une insertion en glissement puis un coincement suffisant du porte-capsule dans l'embase dans sa position d'insertion sous l'effet conjugué de la géométrie des moyens complémentaires d'insertion et de la pression de fluide qui s'exerce dans la capsule. Dès la mise en pression du système, les forces de frottement entre la capsule et l'unité d'alimentation augmentent de manière telle qu'un serrage entre la surface interne de l'unité d'alimentation et le porte-capsule s'effectue.

Comme dans le mode précédent, le dispositif comprend un porte-capsule 60 détachable de l'unité d'alimentation de fluide 2 laquelle est solidaire du reste du dispositif comme selon la figure 1. Le porte-capsule possède une portion de support libre 110 largement ouverte vers le haut laquelle forme une coque pour recevoir une capsule 3. La capsule repose ainsi dans la cavité formée par la portion libre ou coque et ses bords 340 s'agencent en appui contre les bords supérieurs 712 du porte-capsule.

Le porte-capsule 60 comprend deux bords latéraux formant des nervures 710 possédant une épaisseur variable. Plus précisément, les bords ou arêtes ont une épaisseur qui décroit en direction de l'extrémité d'insertion libre du porte-capsule. L'arête inférieure 711 des nervures forme une pente et converge en direction de l'arête supérieure 712 dans le sens d'insertion du porte-capsule dans l'unité. Les nervures possèdent donc une épaisseur définie par les arêtes 711, 712 qui se réduit progressivement en direction de l'extrémité libre du porte-capsule. De chaque côté du porte-capsule, l'arête inférieure 711 est destinée à reposer contre une arête inférieure 713 de chaque rainure formée dans l'embase. De préférence, les arêtes 713 de l'embase peuvent être sensiblement horizontales ou légèrement inclinées. L'arête 711 inférieure du porte-capsule forme aussi un angle d'inclinaison B par rapport au bord d'appui supérieure 712 du porte-capsule sur lequel repose la bordure 340 de la capsule. Cet angle B est compris préférentiellement entre 2 et 20 degrés, par exemple, environ 4-6 degrés. De la sorte, le porte-capsule est inséré dans l'embase 200 selon une configuration sensiblement horizontale ou légèrement inclinée par guidage des nervures selon les arêtes inférieures 711, 713 tout en maintenant les bords 712 inclinés. Du fait de l'angle des nervures, la surface d'injection 111 de la capsule est maintenue inclinée durant l'opération d'insertion et de maintien en position d'injection.

On comprend donc bien que les moyens d'insertion en forme de coin peuvent avoir plusieurs fonctions. Une première fonction utilisant le principe du "cône-morse" est une fonction de rattrapage de jeux et/ou de serrage "autobloquant" utilisant la pression d'injection. Une seconde fonction est liée à la surélévation du point d'injection de la capsule pour éviter les résurgences liquides. Une autre fonction est aussi de faciliter l'engagement du porte-capsule dans les moyens d'insertion de l'unité d'alimentation, notamment, en maintenant aussi éloigné que possible la pointe d'injection par rapport à la surface de la capsule notamment au début de l'insertion du porte-capsule, de façon ainsi à éviter de déchirer ou lacérer la surface d'injection de la capsule notamment lorsque celle-ci est de forme légèrement convexe.

L'unité d'alimentation possède, quant à elle, un support 40 sur lequel s'agencent les moyens d'injection 500 lesquels sont déplaçables dans une direction en rotation. Plus précisément, le support mobile 40 en forme de disque est monté sur une extension 282 de l'embase selon un axe de rotation 460 situé sur le côté, par exemple à l'arrière, du disque. Le support mobile est actionné par des moyens d'actionnement 275 du type à genouillère et un levier 276 comme dans le mode des figures 1 à 6. Les moyens d'injection sont identiques à ceux des modes des figures 1 à 6. Lors de la fermeture, En fermeture, le support mobile 40 traverse une ouverture pratiquée dans l'embase fixe de l'unité d'alimentation pour s'appliquer contre la surface de la capsule. Le support mobile comprend une portion d'engagement 150 de forme convexe laquelle permet de réduire le volume de la capsule lors de la fermeture pour les même raisons que celles précédemment décrites.

Le serrage des bords de la capsule 345 contre la surface inférieure de l'embase fixe de l'unité d'alimentation s'effectue essentiellement par un effet de "cône-morse" qui s'exerce par la conjugaison de la géométrie en forme de coin et la montée en pression dans la capsule.

Bien entendu, l'invention n'est pas non plus limitée aux modes de réalisations ainsi décrit mais s'étend à d'autres modes possibles dans le cadre de la portée des revendications figurant en annexe.

## Revendications

1. Système pour la préparation d'un liquide alimentaire à partir d'une capsule comprenant un dispositif, celui-ci comprenant:
- une unité d'alimentation (2) en fluide d'injection dans la capsule,
- un porte-capsule (6) configuré pour recevoir et supporter une capsule,
- des moyens d'injection (5) mobiles relativement au porte-capsule (6) pour injecter un fluide d'injection dans la capsule,
et une capsule (3) comprenant une surface d'injection (10), ladite capsule (3) étant prévue pour être logée dans le porte-capsule (6),
**caractérisé en ce que**
le porte-capsule (6) est positionné dans l'unité d'alimentation (2) en position d'injection de manière que la surface d'injection (10) de la capsule soit sensiblement maintenue selon un plan incliné inférieur à 45 degrés relativement au plan horizontal et,
les moyens d'injection (5) sont configurés pour être décalés du côté le plus élevé de la capsule (3) après engagement des moyens d'injection (5) contre la surface d'injection de la capsule.

2. Système selon la revendication 1, **caractérisé en ce que** le dispositif comprend un support d'injection relié par des moyens d'actionnement pour engager et désengager les moyens d'injection de la surface d'injection de la capsule en maintenant la capsule en position inclinée.

3. Système selon la revendication 1 ou 2, **caractérisé en ce que** les moyens d'injection sont configurés pour former un point d'injection au travers de la surface à l'intérieur du quadrant le plus élevé par rapport au centre (O) de ladite surface de la capsule.

4. Système selon l'une des revendications précédentes, **caractérisé en ce que** la surface d'injection de la capsule est inclinée selon un angle compris entre 2 et 20 degrés par rapport au plan horizontal.

5. System selon l'une des revendications précédentes, **caractérisé en ce que** le porte-capsule est détachable du dispositif et le dispositif comprend des moyens complémentaires d'insertion permettant l'insertion du porte-capsule à partir de sa position détachée dans sa position d'injection dans l'unité d'alimentation.

6. Système selon la revendication 5, **caractérisé en ce que** les moyens complémentaires d'insertion comprennent des nervures associées à des rainures de guidage.

7. Système selon la revendication 6, **caractérisé en ce que** les moyens d'insertion de l'unité d'alimentation sont dirigés selon un plan incliné par rapport au plan horizontal de telle sorte que le porte-capsule est guidé dans la direction dudit plan incliné lors de son insertion et retrait de l'unité d'alimentation.

8. Système selon la revendication 6 ou 7, **caractérisé en ce que** les moyens complémentaires d'insertion sont des moyens de guidage sensiblement linéaires en forme de coin.

9. Système selon l'une quelconque des revendications précédentes, **caractérisé en ce que** les moyens d'injection comprennent une seule pointe d'injection supportée par un support d'injection mobile en engagement relativement à la capsule.

10. Système selon la revendication 9, **caractérisé en ce que** ladite pointe d'injection forme une ouverture dans la surface d'injection de la capsule d'au moins 1 mm de diamètre.

11. Système selon les revendications 9 ou 10, **caractérisé en ce que** le support d'injection comprend une portion d'engagement en relief pour repousser ladite surface d'injection de la capsule vers l'intérieur de la capsule et diminuer ainsi le volume interne de la capsule.

12. Système selon la revendication 11, **caractérisé en ce que** la portion d'engagement est convexe et espacée de la pointe d'injection.

13. Système selon l'une quelconque des revendications 9 à 12, **caractérisé en ce qu'**un moyen d'étanchéité est prévu en association avec les moyens d'injection pour réaliser l'étanchéité directement entre lesdits moyens d'injection et la surface d'injection de la capsule.

14. Système selon la revendication 13, **caractérisé en ce que** le moyen d'étanchéité est une bague d'étanchéité entourant la base de la pointe d'injection.

15. Système selon la revendication 13, **caractérisé en ce que** le moyen d'étanchéité s'étend sur le support mobile pour s'appliquer contre sensiblement toute la surface d'injection de la capsule.

16. Système selon l'une quelconque des revendications 14 à 15, **caractérisé en ce que** le moyen d'étanchéité est une bague ou revêtement en matériau élastomère ou silicone.

17. Système selon l'une quelconque des revendications 1 à 16, **caractérisé en ce que** la capsule comprend un corps comprenant une bordure sur laquelle est scellée une membrane flexible formant la paroi d'injection.

18. Système selon la revendication 17 **caractérisé en ce que** la surface d'injection de la capsule est convexe avant engagement du support d'injection et est déformée pour devenir sensiblement concave après l'engagement du support d'injection.

19. Dispositif pour la préparation d'un liquide alimentaire à partir d'une capsule comprenant:
- un porte-capsule (6) comprenant un logement pour recevoir une capsule (3),
- une unité d'alimentation (2) en fluide d'injection comprenant une embase fixe (20) et un support d'injection mobile (4) relativement à l'embase et actionnable en engagement par rapport au porte-capsule (6) sur lequel sont agencés des moyens d'injection (5) pour injecter un fluide d'injection dans la capsule (3) après engagement du support relativement au porte-capsule,
**caractérisé en ce que**
le porte-capsule (6) est positionné dans l'unité d'alimentation en position d'injection selon un plan incliné inférieur à 45 degrés relativement au plan horizontal,
**et en ce que** le support mobile (4) est déplaçable en engagement relativement au porte-capsule (6) pour disposer les moyens d'injection de manière excentrée par rapport à l'axe central du support mobile et du côté sensiblement le plus relevé dans le logement du porte-capsule tandis que le porte-capsule est maintenu en position inclinée dans l'unité d'alimentation.

20. Porte-capsule (6) destiné à être inséré dans une unité d'alimentation (2) de fluide pour la préparation d'un liquide à partir d'une capsule contenant au moins une substance alimentaire, ledit porte-capsule comprenant:
- un logement pour recevoir une capsule,
- une extrémité libre,
- des moyens d'insertion (7) dans l'unité d'alimentation comprenant au moins une portion de nervure et/ou rainure de guidage,
**caractérisé en ce que**
ladite portion de nervure et/ou rainure de guidage a une épaisseur variable formant ainsi un moyen d'insertion linéaire en forme de coin.

21. Porte-capsule selon la revendication 20, **caractérisé en ce que** l'épaisseur de ladite portion de nervure ou rainure comprend une paire d'arêtes inférieures qui convergent en direction d'une paire d'arêtes supérieures et vers l'extrémité libre du porte-capsule.

22. Porte-capsule selon la revendication 21, **caractérisé en ce que** les arêtes supérieures et inférieures font un angle d'environ 5 à 20 degrés.

23. Méthode pour diminuer les résurgences liquide ou de mélange gaz-liquide au travers d'au moins un point d'injection d'une capsule dues à la surpression créée lors de l'injection d'un fluide sous pression par des moyens d'injection dans la capsule lors de la préparation d'un liquide alimentaire; la méthode comprenant:
le perçage d'une surface d'injection de la capsule en déplaçant un moyen d'injection relativement à la capsule,
le maintien durant l'injection de la capsule en position légèrement inclinée par rapport au plan horizontal en plaçant le point d'injection de la capsule plus haut que le centre de ladite surface.

24. Méthode selon la revendication 23, **caractérisée en ce que**
les moyens d'injection sont désengagés par rapport à la capsule en maintenant la capsule selon la même position inclinée.

25. Méthode selon la revendication 24, **caractérisée en ce que** la surface d'injection de la capsule est maintenue inclinée selon un angle compris entre 5 et 20 degrés par rapport au plan horizontal.

26. Méthode selon l'une quelconque des revendications 23 à 25**, caractérisée en ce que** la capsule est maintenue en position inclinée dans un porte-capsule amovible lui-même maintenu incliné par rapport à une unité d'alimentation en fluide sous pression.

27. Méthode selon l'une quelconque des revendications 23 à 26, **caractérisée en ce que** la capsule est formée d'un corps en matériau rigide ou semi-rigide fermée par une membrane souple étanche à l'air.

## Claims

1. System for preparing an alimentary liquid from a capsule, said system comprising a device, the latter comprising:
- a unit (2) for feeding injection fluid into the capsule;
- a capsule-carrier (6) which is configured so as to receive and support a capsule;
- injecting means (5) which can be moved, relative to the capsule-carrier (6), so as to inject an injection fluid into the capsule;
- and a capsule (3) comprising an injection surface (10), the said capsule (3) being intended to be housed in the capsule-carrier (6),
**characterised in that**
the capsule-carrier (6) is positioned within the feeding unit (2) in an injecting position in such a way that the injection surface (10) of the capsule is substantially held along a plane which is inclined less than 45 degrees relative to the horizontal plane, and
the injecting means (5) are configured so as to be offset on the highest side of the capsule (3) after engagement of the injecting means (5) against the injection surface of the capsule.

2. System according to claim 1, **characterised in that** the device comprises an injection support which is connected by actuating means so as to engage the injecting means with, and disengage them from, the injection surface of the capsule while keeping the capsule in an inclined position.

3. System according to claim 1 or 2, **characterised in that** the injecting means are configured so at to form a point of injection through the surface within the highest quadrant in relation to the centre (O) of the said surface of the capsule.

4. System according to one of the preceding claims, **characterised in that** the injection surface of the capsule is inclined at an angle of between 2 and 20 degrees in relation to the horizontal plane.

5. System according to one of the preceding claims, **characterised in that** the capsule-carrier can be detached from the device and said device comprises supplementary insertion means which permit the insertion of the capsule-carrier from its detached position into its injection position in the feeding unit.

6. System according to claim 5, **characterised in that** the supplementary insertion means comprise ribs which are associated with guide grooves.

7. System according to claim 6, **characterised in that** the insertion means of the feeding unit are directed along a plane which is inclined in relation to the horizontal plane in such a way that the capsule-carrier is guided in the direction of the said inclined plane when it is inserted in, and withdrawn from, the feeding unit.

8. System according to claim 6 or 7, **characterised in that** the supplementary insertion means are wedge-shaped, substantially linear guide means.

9. System according to any of the preceding claims, **characterised in that** the injecting means comprise a single injecting spike which is supported by an injection support which can be moved into engagement, relative to the capsule.

10. System according to claim 9, **characterised in that** the said injecting spike forms an opening at least 1 mm in diameter in the injection surface of the capsule.

11. System according to claim 9 or 10, **characterised in that** the injection support comprises a raised engaging portion for pushing the said injection surface of the capsule back towards the interior of said capsule and thus reducing the internal volume of the capsule.

12. System according to claim 11, **characterised in that** the engaging portion is convex and spaced apart from the injecting spike.

13. System according to any of claims 9 to 12, **characterised in that** a sealing means is provided in association with the injecting means so as to bring about direct sealing between the said injecting means and the injection surface of the capsule.

14. System according to claim 13, **characterised in that** the sealing means is a sealing ring which surrounds the base of the injecting spike.

15. System according to claim 13, **characterised in that** the sealing means extends over the movable support so as to be applied against substantially the entire injection surface of the capsule.

16. System according to either of claims 14 or 15, **characterised in that** the sealing means is a ring or covering made of elastomer material or silicone material.

17. System according to any of claims 1 to 16, **characterised in that** the capsule comprises a body comprising a border onto which a flexible membrane forming the injection wall is fixed.

18. System according to claim 17, **characterised in that** the injection surface of the capsule is convex prior to engagement of the injection support, and is deformed so as to become substantially concave after the engagement of said injection support.

19. Device for preparing an alimentary liquid from a capsule, said device comprising:
- a capsule-carrier (6) comprising a housing for receiving a capsule (3);
- a unit (2) for feeding in injection fluid, said unit comprising a fixed base (20) and an injection support (4) which can be moved, relative to said base, and can be brought into engagement in relation to the capsule-carrier (6) and on which injecting means (5) are arranged so as to inject an injection fluid into the capsule (3) after engagement of the support relative to the capsule-carrier;
**characterised in that**
the capsule-carrier (6) is positioned within the feeding unit in an injecting position along a plane which is inclined less than 45 degrees, relative to the horizontal plane,
and **in that**
the movable support (4) can be displaced into engagement, relative to the capsule-carrier (6), so as to dispose the injecting means in an eccentric manner in relation to the central axis of the movable support and on substantially the most raised side within the housing of the capsule-carrier, while said capsule-carrier is held in an inclined position in the feeding unit.

20. Capsule-carrier (6) intended for insertion in a unit (2) for feeding in fluid for preparing a liquid from a capsule containing at least one alimentary substance, the said capsule-carrier comprising:
- a housing for receiving a capsule;
- a free end;
- means (7) of insertion in the feeding unit which comprise at least one guide-rib and/or guide-groove portion,
**characterised in that**
the said guide-rib and/or guide-groove portion has a variable thickness, thus forming a wedge-shaped, linear insertion means.

21. Capsule-carrier according to claim 20, **characterised in that** the thickness of the said rib portion or groove portion comprises a pair of lower arrises which converge in the direction of a pair of upper arrises and towards the free end of the capsule-carrier.

22. Capsule-carrier according to claim 21, **characterised in that** the upper and lower arrises form an angle of about 5 to 20 degrees.

23. Method of reducing resurgences of liquid or gas/liquid mixture through at least one injection point of a capsule which are due to the excess pressure set up when a pressurised fluid is injected into the capsule by injecting means when an alimentary liquid is being prepared; the said method comprising:
the piercing of an injection surface of the capsule by displacing an injecting means relative to said capsule;
the holding of the capsule in a position which is slightly inclined in relation to the horizontal plane during the injecting operation, while locating the injection point of the capsule higher than the centre of the said surface.

24. Method according to claim 23, **characterised in that** the injecting means are disengaged in relation to the capsule, while holding the capsule in the same inclined position.

25. Method according to claim 24, **characterised in that** the injection surface of the capsule is held inclined at an angle of between 5 and 20 degrees in relation to the horizontal plane.

26. Method according to any of claims 23 to 25, **characterised in that** the capsule is held in an inclined position in a detachable capsule-carrier which is itself held at an inclination in relation to a unit for feeding in pressurised fluid.

27. Method according to any of claims 23 to 26, **characterised in that** the capsule is made up of a body made of rigid or semi-rigid material closed by an airtight flexible membrane.

## Patentansprüche

1. System zur Zubereitung einer Nahrungsflüssigkeit aus einer Kapsel, umfassend eine Vorrichtung, die umfasst:
- eine Einheit (2) zur Versorgung der Kapsel mit einem Einspritzfluid,
- einen Kapselhalter (6), der dafür ausgebildet ist, eine Kapsel aufzunehmen und zu halten,
- bezüglich des Kapselhalters (6) bewegliche Einspritzmittel (5) zum Einspritzen eines Einspritzfluides in die Kapsel, und eine Kapsel (3), die eine Einspritzfläche (10) umfasst und dafür vorgesehen ist, in dem Kapselhalter (6) untergebracht zu werden,
**dadurch gekennzeichnet, dass**
der Kapselhalter (6) in der Versorgungseinheit (2) in Einspritzstellung so angeordnet ist, dass die Einspritzfläche (10) im Wesentlichen in einer Ebene gehalten wird, die gegen die horizontale Ebene weniger als 45 Grad geneigt ist, und
die Einspritzmittel (5) dafür ausgebildet sind, nach Ansetzen der Einspritzmittel (5) an die Einspritzfläche der Kapsel auf die höchste Seite der Kapsel (3) versetzt zu sein.

2. System nach Anspruch 1, **dadurch gekennzeichnet, dass** die Vorrichtung einen Einspritzträger umfasst, der durch Betätigungsrnittel verbunden ist, um die Einspritzmittel bezüglich der Einspritzfläche der Kapsel ein- und auszurücken, indem die Kapsel in geneigter Stellung gehalten wird.

3. System nach Anspruch 1 oder 2, **dadurch gekennzeichnet, dass** die Einspritzmittel ausgebildet sind, um einen Punkt der Einspritzung durch die Fläche innerhalb des Quadranten zu bilden, der bezüglich des Mittelpunkts (O) dieser Fläche der Kapsel am höchsten ist.

4. System nach einem der vorhergehenden Ansprüche, **dadurch gekennzeichnet, dass** die Einspritzfläche der Kapsel in einem Winkel zwischen 2 und 20 Grad gegen die horizontale Ebene geneigt ist.

5. System nach einem der vorhergehenden Ansprüche, **dadurch gekennzeichnet, dass** der Kapselhalter von der Vorrichtung abkuppelbar ist und die Vorrichtung einander ergänzende Einführungsmittel umfasst, die die Einführung des Kapselhalters von seiner abgekuppelten Stellung aus in seine Einspritzstellung in der Versorgungseinheit gestattet.

6. System nach Anspruch 5, **dadurch gekennzeichnet, dass** die einander ergänzenden Einführungsmittel Rippen umfassen, denen Führungsnuten zugeordnet sind.

7. System nach Anspruch 6, **dadurch gekennzeichnet, dass** die Einführungsmittel der Versorgungseinheit in einer Ebene gerichtet sind, die gegen die horizontale Ebene geneigt ist, so dass der Kapselhalter bei seiner Einführung und bei der Entnahme aus der Versorgungseinheit in der Richtung dieser geneigten Ebene geführt ist.

8. System nach Anspruch 6 oder 7, **dadurch gekennzeichnet, dass** die einander ergänzenden Einführungsmittel im Wesentlichen lineare Führungsmittel in Keilform sind.

9. System nach einem der vorhergehenden Ansprüche, **dadurch gekennzeichnet, dass** die Einspritzmittel eine einzige Einspritzspitze umfassen, die von einem Einspritzträger getragen ist, der bezüglich der Kapsel hinsichtlich Einrückung beweglich ist.

10. System nach Anspruch 9, **dadurch gekennzeichnet, dass** die Einspritzspitze in der Einspritzfläche der Kapsel eine Öffnung mit einem Durchmesser von mindestens 1 mm bildet.

11. System nach den Ansprüche 9 oder 10, **dadurch gekennzeichnet, dass** der Einspritzträger einen vorstehenden Einführungsabschnitt umfasst, um die Einspritzfläche der Kapsel auf das Innere der Kapsel zu zu drücken und auf diese Weise das Innenvolumen der Kapsel zu verringern.

12. System nach Anspruch 11, **dadurch gekennzeichnet, dass** der Einführungsabschnitt konvex ist und von der Einspritzspitze beabstandet ist.

13. System nach einem der Ansprüche 9 bis 12, **dadurch gekennzeichnet, dass** ein Dichtungsmittel vorgesehen ist, das den Einspritzmitteln zugeordnet ist, um die Abdichtung direkt zwischen den Einspritzmitteln und der Einspritzfläche der Kapsel herzustellen.

14. System nach Anspruch 13, **dadurch gekennzeichnet, dass** das Dichtungsmittel ein Dichtring ist, der die Basis der Einspritzspitze umgibt.

15. System nach Anspruch 13, **dadurch gekennzeichnet, dass** das Abdichtungsmittel sich über den beweglichen Träger erstreckt, um sich im Wesentlichen an die ganze Einspritzfläche der Kapsel anzulegen.

16. System nach einem der Ansprüche 14 bis 15, **dadurch gekennzeichnet, dass** das Dichtungsmittel ein Ring oder Belag aus Elastomer oder Silicon ist.

17. System nach einem der Ansprüche 1 bis 16, **dadurch gekennzeichnet, dass** die Kapsel einen Körper umfasst, der einen Flansch umfasst, auf den eine die Einspritzwand bildende flexible Membran aufgesiegelt ist.

18. System nach Anspruch 17, **dadurch gekennzeichnet, dass** die Einspritzfläche der Kapsel vor Einführung des Einspritzträgers konvex ist und verformt wird, um nach der Einführung des Einspritzträgers im Wesentlichen konkav zu werden.

19. Vorrichtung zur Zubereitung einer Nahrungsflüssigkeit aus einer Kapsel, umfassend
- einen Kapselhalter (6), der eine Kammer zur Aufnahme einer Kapsel (3) umfasst,
- eine Einheit (2) zur Versorgung mit Einspritzfluid, die einen feststehenden Sockel (20) und einen Einspritzträger (4) umfasst, der bezüglich des Sockels beweglich ist und bezüglich des Kapselhalters (6) hinsichtlich Einführung betätigbar ist und auf welchem Einspritzmittel (5) angeordnet sind, um nach Einführung des Trägers bezüglich des Kapselhalters in die Kapsel (3) ein Einspritzfluid einzuspritzen,
**dadurch gekennzeichnet, dass**
der Kapselhalter (6) in der Versorgungseinheit in Einspritzstellung in einer Ebene positioniert ist, die gegen die horizontale Ebene weniger als 45 Grad geneigt ist,
und dass der bewegliche Träger (4) bezüglich des Kapselhalters (6) hinsichtlich Einführung beweglich ist, um die Einspritzmittel bezüglich der Mittelachse des beweglichen Trägers exzentrisch und im Wesentlichen auf der angehobensten Seite in der Kammer des Kapselhalters anzuordnen, während der Kapselhalter in der Versorgungseinheit in geneigter Stellung gehalten ist.

20. Kapselhalter (6), der dazu bestimmt ist, in eine Einheit (2) zur Versorgung mit Fluid für die Zubereitung einer Flüssigkeit aus einer mindestens eine Nahrungsmittelsubstanz enthaltenden Kapsel eingeführt zu werden, wobei dieser Kapselhalter umfasst:
- eine Kammer zur Aufnahme einer Kapsel,
- ein freies Ende,
- Mittel (7) zur Einführung in die Versorgungseinheit, umfassend mindestens einen Rippen- und/oder Führungsnutabschnitt,
**dadurch gekennzeichnet, dass**
der Rippen- und/oder Führungsnutabschnitt eine veränderliche Dicke besitzt, so dass er ein Mittel zur linearen Einführung in Keilform bildet.

21. Kapselhalter nach Anspruch 20, **dadurch gekennzeichnet, dass** die Dicke des Rippen- oder Nutabschnitts ein Paar von unteren Kanten umfasst, die in Richtung eines oberen Kantenpaars und auf das freie Ende des Kapselhalters zu konvergieren.

22. Kapselhalter nach Anspruch 21, **dadurch gekennzeichnet, dass** die oberen und unteren Kanten einen Winkel von etwa 5 bis 20 Grad bilden.

23. Verfahren zur Verringerung des Austretens von Flüssigkeit oder Gas-Flüssigkeits-Gemisch durch mindestens einen Einspritzpunkt einer Kapsel infolge des Überdrucks, der bei der Einspritzung eines unter Druck stehenden Fluids durch Mittel zur Einspritzung in die Kapsel bei der Zubereitung einer Nahrungsflüssigkeit erzeugt wird, wobei dieses Verfahren umfasst:
das Perforieren einer Einspritzfläche der Kapsel, indem ein Einspritzmittel bezüglich der Kapsel bewegt wird,
das Halten der Kapsel während der Einspritzung in einer gegen die horizontale Ebene leicht geneigten Stellung, indem der Einspritzpunkt der Kapsel höher als der Mittelpunkt der Fläche angeordnet wird.

24. Verfahren nach Anspruch 23, **dadurch gekennzeichnet, dass** die Einspritzmittel aus der Kapsel ausgerückt werden, indem die Kapsel in derselben geneigten Stellung gehalten wird.

25. Verfahren nach Anspruch 24, **dadurch gekennzeichnet, dass** die Einspritzfläche der Kapsel in einem Winkel zwischen 5 und 20 Grad bezüglich der horizontalen Ebene geneigt gehalten wird.

26. Verfahren nach einem der Ansprüche 23 bis 25, **dadurch gekennzeichnet, dass** die Kapsel in geneigter Stellung in einem abnehmbaren Kapselhalter gehalten wird, der seinerseits bezüglich einer Einheit zur Versorgung mit Druckfluid geneigt gehalten wird.

27. Verfahren nach einem der Ansprüche 23 bis 26, **dadurch gekennzeichnet, dass** die Kapsel von einem Körper aus einem starren oder halbstarren Werkstoff gebildet ist, der durch eine biegsame, luftdichte Membran geschlossen ist.
